# EUROPÄISCHE PATENTSCHRIFT

(11) **EP 2 984 123 B1**
(45) Veröffentlichungstag und Bekanntmachung des Hinweises auf die Patenterteilung: **11.01.2017**
(21) Anmeldenummer: 14714642.7
(22) Anmeldetag: 25.03.2014
(51) Int. Cl.: C08J 3/12, B01D 1/18, C08F 6/12, C08L 27/06, C08L 29/04, C08L 31/04, F26B 3/12

(54) **VERFAHREN ZUR HERSTELLUNG VON DISPERSIONSPULVERN**
PROCESS FOR PRODUCING DISPERSIBLE POWDERS
PROCÉDÉ DE PRÉPARATION DE POUDRES DISPERSIBLES

(30) Priorität: 10.04.2013 DE 102013206267
(43) Veröffentlichungstag der Anmeldung: 17.02.2016
(73) Patentinhaber: Wacker Chemie AG, 81737 München (DE)
(72) Erfinder: KILLAT, Stefan, 84489 Burghausen (DE)
(74) Vertreter: Schuderer, Michael
(86) Internationale Anmeldenummer: PCT/EP2014/055902
(87) Internationale Veröffentlichungsnummer: WO 2014/166727

(56) Entgegenhaltungen:
- DE-A1- 10 241 447
- DE-A1- 10 321 759
- DE-A1-102011 080 233
- US-A1- 2004 145 069
- W. RÄHSE ET AL: "Produktdesign disperser Stoffe: Industrielle Sprühtrocknung", CHEMIE INGENIEUR TECHNIK, Bd. 81, Nr. 6, 1. Juni 2009 (2009-06-01), Seiten 699-716, XP055125626, ISSN: 0009-286X, DOI: 10.1002/cite.200800191 in der Anmeldung erwähnt

## Beschreibung

Die Erfindung betrifft ein Verfahren zur Herstellung von Dispersionspulvern durch Sprühtrocknung von wässrigen Polymerdispersionen in einem Düsenzerstäubungstrockner.

Dispersionspulver sind Polymerpulver, welche durch Sprühtrocknung der entsprechenden wässrigen Polymerdispersionen zugänglich sind. Dabei wird unterschieden zwischen Dispersionspulvern, welche in Wasser redispergierbar sind, und solchen die dieses Eigenschaftsbild nicht aufweisen. In Wasser redispergierbare Polymerpulver werden im Allgemeinen durch Trocknung der entsprechenden wässrigen Polymerdispersionen, in Gegenwart von einer Trocknungshilfe (im Allgemeinen ein Schutzkolloid) und gegebenenfalls von Antiblockmittel und gegebenenfalls weiteren Additiven erhalten. Aufgrund des Schutzkolloidanteils wird zum einen beim Trocknungsvorgang verhindert, dass die Polymerteilchen irreversibel verkleben, da die Polymerteilchen von den Schutzkolloid-Teilchen umhüllt werden. Zum anderen bewirkt diese Schutzkolloid-Matrix, welche sich beim Dispergieren des Polymerpulvers in Wasser wieder auflöst, dass die Polymerpartikel wieder mit der Partikelgröße der Ausgangsdispersion in der wässrigen Redispersion vorliegen (TIZ-Fachberichte, 1985, Vol. 109 (9), 698).

Bei Dispersionspulvern, welche nicht redispergierbar sein sollen, kann gegebenenfalls auf die Zugabe von Schutzkolloid bei der Trocknung verzichtet werden.

Zur Minimierung von Pulververblockungen, insbesondere bei Dispersionspulvern auf Basis von Polymerisaten mit einer Glasübergangstemperatur Tg von ≤ 25°C, und zur Verbesserung der Rieselfähigkeit und Fließfähigkeit werden den Dispersionspulvern bei deren Herstellung Antiblockmittel (Antibackmittel) zugegeben. Die Zugabe des Antiblockmittels kann während des Trocknungsschritts erfolgen oder nach der Trocknung.

Das Antiblockmittel (ABM) dient zur Sicherstellung der Rieselfähigkeit und der Lagerstabilität des nach Sprühtrocknung erhaltenen Polymerpulvers (Dispersionspulvers). Antiblockmittel sind insbesondere dann ein Bestandteil des Dispersionspulvers, wenn aufgrund einer niedrigen Glasübergangstemperatur des Polymers oder starker Hygroskopie Verblockungen des Pulvers bzw. Anbackungen an der Trocknerwand zu erwarten sind. Durch die Bepuderung der Teilchenoberfläche mit Antiblockmittel wird aufgrund geringerer Agglomeratbildung insbesondere auch der Anteil an Grobkorn vermindert, was sich sehr vorteilhaft auf den Trocknungsprozess sowie auf die Eigenschaften des Pulvers (z.B. Rieselfähigkeit und Lagerstabilität) auswirken kann.

Derartige Dispersionspulver werden in vielerlei Anwendungen eingesetzt, unter anderem in Beschichtungsmittel und in Klebemittel für die unterschiedlichsten Substrate. Ein Beispiel für die Anwendung von nicht in Wasser redispergierbaren Dispersionspulvern ist die Verwendung als Bindepulver für partikuläre Naturmaterialien (Vinnex^{R}-Pulver der Wacker Chemie AG).

Weit verbreitet ist die Anwendung von in Wasser redispergierbaren Dispersionspulvern in bauchemischen Produkten, häufig in Verbindung mit mineralischen Bindemitteln (Vinnapas^{R}-Pulver der Wacker Chemie AG). Beispiele hierfür sind Baukleber insbesondere Fliesenkleber, Putze und Mörtelmassen, Farben, Spachtelmassen, Verlaufsmassen, Wärmedämmverbundsysteme und Fugenmörtel. Der Vorteil der in Wasser redispergierbaren Dispersionspulver liegt vor allem in der Möglichkeit sie in vorgefertigten, lagerfähigen Trockenmischungen einzusetzen, gegebenenfalls zusammen mit mineralischen Bindemitteln wie Zement, und diese erst unmittelbar vor der Verwendung durch Zugabe von Wasser gebrauchsfertig zu machen. Derartige Trockenmischungen können gegenüber pastösen Systemen leichter transportiert werden (ohne Wasseranteil) und bieten Vorteile bei der Lagerung, wie zum Beispiel Unempfindlichkeit gegenüber Frost sowie Resistenz gegenüber Mikrobenbefall.

Die Herstellung der Dispersionspulver erfolgt in bekannten Sprühtrocknern, welche sich in Düsenzerstäubungstrockner und Rotationszerstäubungstrockner aufteilen lassen. Bei Düsenzerstäubungstrocknern wird die Polymerdispersion (Speise), im Allgemeinen am oberen Ende des Trockners, mittels einer oder mehreren Einstoffdüsen (Druckdüsen) unter Druck zerstäubt oder zusammen mit Pressluft über eine oder mehrere Zweistoffdüsen oder eine oder mehrere Mehrstoffdüsen zerstäubt. Bei Rotationszerstäubungstrocknern erfolgt die Zerstäubung mittels Rotationszerstäuber, z.B. in Form einer Zerstäuberscheibe, Becherzerstäuber oder poröser Hohlzylinder.

Im Allgemeinen wird so vorgegangen, dass die Polymerdispersion ohne Vorerwärmung, mit Umgebungstemperatur, dem Sprühtrockner zugeführt wird und mit einem heißen Trocknungsgas getrocknet wird. Im Allgemeinen liegt die Eintrittstemperatur des Trocknungsgases im Temperaturbereich von 100°C bis 200°C. Diese Vorgehensweise ist vielfach vorbeschrieben, beispielsweise in der DE 3101413 C2, DE 4406822 A1, DE 19752435 A1, EP 407889 A1, EP 1000113 B1 EP 1110978 B1 EP 1720933 B1 EP 2341084 A1, WO 01/83071 A1. Dies ist darin begründet, dass wässrige Polymerdispersionen mit einer niederen Mindestfilmbildetemperatur (MFT) von unter 60°C, also einer MFT welche typisch ist für wässrige Dispersionen von thermoplastischen Polymeren, als sehr empfindlich bei hoher Temperatur gelten. Dies gilt auch für Dispersionen von Emulsionspolymerisaten mit einer niederen Glasübergangstemperatur Tg. Die EP 332067 A1 empfiehlt daher aus diesen Gründen die Dispersion zusammen mit Wasser zu versprühen.

In der DE 10 2011 080 233 A1 wird ein Verfahren zur Herstellung von Dispersionspulvern beschrieben, bei welchem zur Beschleunigung der Trocknung das Trocknungsgas auf eine Eintrittstemperatur von 130°C bis 210°C vorerwärmt wird. Die zu trocknende Polymerdispersion wird auf eine Temperatur von 50°C bis 98°C vorerwärmt und mittels Rotationszerstäuber versprüht. In Chemie Ingenieur Technik 2009, 81, No.6, 699-716 wird für temperaturunempfindliche Stoffe beim Versprühen mit Einstoffdüsen ein Flash-Verfahren empfohlen, bei welchem die zu versprühende Suspension auf eine Temperatur von 120°C bis 200°C aufgeheizt wird.

Der Erfindung lag die Aufgabe zugrunde, ein Verfahren zur Sprühtrocknung von wässrigen Polymerdispersionen zur Verfügung zu stellen, mit welchem sich der Trocknungsprozess verbessern lässt, ohne dass es zur Schädigung des getrockneten Polymerpulvers (Dispersionspulvers) kommt.

Gegenstand der Erfindung ist ein Verfahren zur Herstellung von Dispersionspulvern durch Sprühtrocknung von wässrigen Polymerdispersionen von Polymerisaten von einem oder mehreren ethylenisch ungesättigten Monomeren ausgewählt aus der Gruppe umfassend Vinylester, Methacrylsäureester, Acrylsäureester, Olefine, Diene, Vinylaromaten und Vinylhalogenide mit einem Trocknungsgas in einem Düsenzerstäubungstrockner, dadurch gekennzeichnet, dass die wässrige Polymerdispersion (Speise), vor deren Zerstäubung, unter Druck auf eine Temperatur von 100°C bis 200°C vorerwärmt wird und mit dieser Temperatur zerstäubt wird, wobei der Druck so eingestellt wird, dass die wässrige Phase der Polymerdispersion (Speise) bei der gewählten Temperatur nicht siedet.

Die Basispolymerisate für die Dispersionspulver werden zur Sprühtrocknung in Form deren wässrigen Polymerdispersionen eingebracht. Geeignete Basispolymerisate für die Dispersionspulver (Polymerpulver) sind solche von einem oder mehreren ethylenisch ungesättigten Monomeren ausgewählt aus der Gruppe umfassend Vinylester von Carbonsäuren mit 1 bis 15 C-Atomen, Methacrylsäureester, Acrylsäureester von Carbonsäuren mit unverzweigten oder verzweigten Alkoholen mit 1 bis 15 C-Atomen, Olefine, Diene, Vinylaromaten und Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9^{R} o-der VeoVa10^{R} (Handelsnamen der Firma Momentive). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Gegebenenfalls können noch 0,1 bis 10 Gew.-%, bezogen auf das Gesamtgewicht des Basispolymerisats, von einem oder jeweils von mehreren Hilfsmonomeren copolymerisiert werden. Beispiele für Hilfsmonomere sind ethylenisch ungesättigte Mono- und Dicarbonsäuren, ethylenisch ungesättigte Carbonsäureamide, ethylenisch ungesättigte Sulfonsäuren bzw. deren Salze, vorvernetzende Comonomere wie mehrfach ethylenisch ungesättigte Comonomere, nachvernetzende Comonomere wie N-Methylolacrylamid, epoxidfunktionelle Comonomere, siliciumfunktionelle Comonomere.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit einem oder mehreren weiteren Vinylestern, Mischpolymerisate von Vinylacetat mit Ethylen und Acrylsäureester, Mischpolymerisate von Vinylacetat mit Ethylen und Vinylchlorid, Mischpolymerisate von Vinylchlorid und Ethylen und gegebenenfalls einem oder mehreren weiteren Vinylestern, Mischpolymerisate von Styrol mit Acrylsäureester, Mischpolymerisate von Styrol mit 1,3-Butadien; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden Vinylacetat-Homopolymerisate; Mischpolymerisate von Vinylacetat mit 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, Veo-Val10^{R}, VeoVa11^{R}; Mischpolymerisate von Vinylacetat, 1 bis 40 Gew.-% Ethylen und vorzugsweise 1 bis 60 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat; Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat, welche noch 1 bis 40 Gew.-% Ethylen enthalten können; Mischpolymerisate mit einem oder mehreren Vinylestern mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10R, VeoVa11^{R}, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)Acrylsäureester-Polymerisate, wie Mischpolymerisate von n-Butylacrylat oder 2-Ethylhexylacrylat oder Mischpolymerisate von Methylmethacrylat mit n-Butyl-acrylat und/oder 2-Ethylhexylacrylat und gegebenenfalls Ethyl-en; Mischpolymerisate von Styrol mit Acrylsäureestern vorzugsweise mit einem oder mehreren Monomeren aus der Gruppe Methylacrylat, Ethylacrylat, Propylacrylat, n-Butylacrylat, 2-Ethylhexylacrylat; Mischpolymerisate von Styrol mit 1,3-Butadien; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt so, dass eine Glasübergangstemperatur Tg der Polymerisate von -20°C bis +40°C, vorzugsweise -20°C bis +20°C resultiert. Die Glasübergangstemperatur Tg der Polymerisate kann in bekannter Weise mittels Differential Scanning Calorimetry (DSC) gemäß DIN 53520 ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die wässrigen Dispersionen der genannten Polymerisate haben im Allgemeinen eine Mindestfilmbildetemperatur von 0°C bis +20°C (gemessen nach DIN 53787).

Am meisten bevorzugt werden von den als bevorzugt genannten Homo- oder Mischpolymerisaten jeweils diejenigen mit einer Glasübergangstemperatur Tg von -20°C bis +40°C.

Die Herstellung von wässrigen Polymerdispersionen ist vielfach vorbeschrieben und dem Fachmann bekannt; beispielsweise in Encyclopedia of Polymer Science and Engineering, Vol. 8 (1987), John Wiley and Sons, S. 659-677, und beispielsweise in der EP 1916275 A1.

Die Herstellung der Basispolymerisate erfolgt vorzugsweise nach dem Emulsionspolymerisationsverfahren. Die Polymerisationstemperatur ist vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt vorzugsweise mit den für die Emulsionspolymerisation gebräuchlichen wasserlöslichen Initiatoren oder Redox-Initiator-Kombinationen.

Die Polymerisation erfolgt in Gegenwart von Schutzkolloiden und/oder Emulgatoren. Geeignete Schutzkolloide für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)Acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015) verwendet. Die Schutzkolloide werden im Allgemeinen in einer Menge von 1 bis 20 Gew.-%, bezogen auf das Gesamtgewicht der Monomere, bei der Polymerisation zugegeben.

Wird in Gegenwart von Emulgatoren polymerisiert, beträgt deren Menge 1 bis 5 Gew.-%, bezogen auf das Gesamtgewicht der Monomere. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässrigen Polymerdispersionen haben einen Feststoffgehalt von 30 bis 75 Gew.-%, vorzugsweise von 50 bis 60 Gew.-%.

Zur Herstellung der Dispersionspulver werden die wässrigen Polymerdispersionen, gegebenenfalls nach Zusatz von Schutzkolloid als Trocknungshilfe zur Polymerdispersion, mittels Sprühtrocknung getrocknet. In der Regel wird die Trocknungshilfe (Schutzkolloid) in einer Gesamtmenge von 0,5 bis 30 Gew.-%, bezogen auf das Basispolymerisat der Dispersion, eingesetzt. Geeignete Trocknungshilfen sind die vorher als Schutzkolloide aufgezählten Substanzen:
Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)-acrylsäure, Copolymerisate von (Meth)Acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und jeweils einer Höpplerviskosität, in 4 %-iger wässriger Lösung von 1 bis 30 mPas (Methode nach Höppler bei 20°C, DIN 53015) verwendet.

Als weitere Bestandteile der Dispersionspulver können der Polymerdispersion zusätzliche Additive zugesetzt werden, um die Pulver gegebenenfalls für bestimmte Anwendungen zu konfektionieren. Beispiele für solche Additive sind Entschäumer, Hydrophobierungsmittel und rheologische Additive. Die der Trocknung zuzuführende, gegebenenfalls mit Schutzkolloid und gegebenenfalls mit weiteren Additiven modifizierte Polymerdispersion, bezeichnet man im Fachjargon auch als "Speise" oder "Feed".

Die Sprühtrocknung erfolgt mittels Zerstäubung in üblichen, mit Einstoffdüsen (Druckdüsen), Zweistoffdüsen oder Mehrstoffdüsen ausgerüsteten Sprühtrocknungsanlagen (Düsenzerstäubungstrockner), bei denen die Energie zur Verdampfung der wässrigen Phase durch Wärmeleitung aus dem Trocknungsgas auf die zu trocknende Polymerdispersion (Speise) übertragen wird. Die Speise wird im Allgemeinen mittels Pumpen den Düsen zugeführt. Die Trocknung erfolgt durch innige Vermischung der zerstäubten Polymerdispersion (Speise) mit dem Trocknungsgas. Als Trocknungsgas wird im Allgemeinen Luft eingesetzt. Zur Beschleunigung der Trocknung wird das Trocknungsgas vorerwärmt, vorzugsweise auf eine Eintrittstemperatur von 130°C bis 210°C (Heißluft), besonders bevorzugt auf 150°C bis 190°C. Die Sprühtrocknung erfolgt vorzugsweise nach dem Gleichstromprinzip. Die Polymerdispersion (Speise) wird dabei jeweils mittels einer oder mehreren Einstoffdüsen (Druckdüsen), Zweistoffdüsen oder Mehrstoffdüsen zerstäubt, vorzugsweise wird mittels Einstoffdüsen (Druckdüsen) zerstäubt.

Die gegebenenfalls mit Schutzkolloid und gegebenenfalls weiteren Additiven modifizierte Polymerdispersion (Speise), wird unter Druck auf eine Speisetemperatur von 100°C bis 200°C, vorzugsweise 100°C bis 150°C, besonders bevorzugt 110°C bis 140°C vorerwärmt. Der Druck wird dabei so eingestellt, dass bei dem Temperaturniveau der Vorerwärmung die Speise nicht siedet. Der dazu bei der jeweiligen Temperatur erforderliche Mindestdruck für die wässrige Polymerdispersion (Speise) kann beispielsweise in bekannter Weise aus dem vielfach publizierten Phasendiagramm (p-T-Diagramm) für Wasser abgeschätzt werden (beispielsweise auf der Internetseite der London South Bank University: http://www.lsbu.ac.uk/water/phase.html).

Die Erwärmung kann beispielsweise auf der Saugseite oder der Druckseite einer Pumpe erfolgen, welche die Speise zu den Düsen fördert. Auf der Saugseite werden im Allgemeinen Drücke von bis zu 20 bar abs., bevorzugt bis zu 10 bar abs., angewandt. Auf der Druckseite der Pumpe herrscht der Zerstäubungsdruck, im Allgemeinen 10 bis 200 bar abs., vorzugsweise 30 bis 150 bar. Auch die Kombination Erwärmung auf der Saug- und Druckseite der Pumpe kann ausgeführt werden. Es kann in einer Stufe oder in mehreren Stufen erwärmt werden. Zur Erwärmung der Speise können Wärmetauscher eingesetzt werden. Die Speise kann auch mittels Einleiten von Dampf in die Polymerdispersion erwärmt werden. Geeignete Wärmetauscher sind dem Fachmann bekannt und allgemein zugänglich. Beispiele sind Platten- oder Rohrbündelwärmetauscher im Gleich-, Gegen- oder Kreuzstromprinzip. Die Erwärmung der Speise kann ein- oder mehrstufig erfolgen, wobei einstufige Wärmetauscher bevorzugt sind. Besonders bevorzugt sind Plattenwärmetauscher im Gegenstromprinzip, da diese sich leicht demontieren und reinigen lassen.

Die Polymerdispersion (Speise) und das Trocknungsgas werden am oberen Ende des Sprühtrockners, im Allgemeinen ein zylinderförmiger Turm (Trocknerturm) mit einem Volumen von bis zu mehreren hundert Kubikmetern, zugeführt. Der Trocknerausgang am unteren Ende des Sprühtrockners kann unterschiedlich ausgeführt sein, beispielsweise wird das getrocknete Polymerpulver mit dem Trocknungsgas ausgetragen und mittels eines Filterabscheiders und/oder Zyklonabscheiders isoliert. Die Austrittstemperatur des Trocknungsgases beträgt vorzugsweise 45°C bis 120°C, je nach Anlage, Tg des Harzes und gewünschtem Trocknungsgrad.

Die Dispersionspulver können noch Antiblockmittel enthalten. Geeignete Antiblockmittel (Antibackmittel) sind dem Fachmann bekannt, beispielsweise Aluminiumsilikate wie Kaolin, Bentonit, pyrogene Kieselsäure oder gefällte Kieselsäure, welche gegebenenfalls hydrophobiert sein können, Talkum, Tone, Leichtspat, Carbonate wie Calciumcarbonat, Magnesiumcarbonat und Ca/Mg-Carbonat, Bariumsulfat. Es können auch Gemische von Antiblockmitteln eingesetzt werden. Die Antiblockmittel werden im Allgemeinen in einer Menge von 0,1 bis 30 Gew.-%, vorzugsweise 2 bis 30 Gew.-%, besonders bevorzugt 7 bis 30 Gew.-%, jeweils bezogen auf das Gesamtgewicht der polymeren Bestandteile der zu zerstäubenden Polymerdispersion eingesetzt. Im Falle von pyrogener Kieselsäure oder gefällter Kieselsäure werden vorzugsweise 0,1 bis 2 Gew.-%, bezogen auf die polymeren Bestandteile der zu zerstäubenden Polymerdispersion, eingesetzt. Der Anteil der polymeren Bestandteile der zu zerstäubenden Polymerdispersion setzt sich zusammen aus dem Basispolymerisat der Polymerdispersion und gegebenenfalls dem Schutzkolloidanteil.

Die Zugabe des Antiblockmittels kann zumindest teilweise kontinuierlich und zeitgleich, aber räumlich getrennt von der zu zerstäubenden Polymerdispersion (Speise) erfolgen. Dazu wird das Antiblockmittel in einer Förderleitung mittels eines Fördergases, im Allgemeinen Luft (Förderluft), zur Trocknung vorzugsweise am oberen Ende in den Trocknerturm gefördert. Gegebenenfalls kann das Antiblockmittel auch ganz oder teilweise dem fertig getrockneten Polymerpulver vor oder nach dessen Abscheidung vom Trocknungsgas zugegeben werden.

Die mit dem erfindungsgemäßen Verfahren erhältlichen Dispersionspulver können beispielsweise in bauchemischen Produkten in Verbindung mit anorganischen, hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Fugenmörtel und Farben eingesetzt werden. Ferner als Bindemittel für Beschichtungsmittel, beispielsweise Dispersionsfarben und Pulverfarben, und als Bindemittel in Klebemitteln, beispielsweise für Holz, Pappe, Papier und Fasermaterialien, insbesondere in Holzklebstoffen, Parkettklebstoffen, Verpackungsklebstoffen, Buchbindeklebstoffen. Eine weitere Anwendung ist die als Bindemittel für Textilien und Papier. Die mit dem erfindungsgemäßen Verfahren erhältlichen Dispersionspulver eignen sich auch als Bindemittel für partikuläre Materialien wie Fasermaterialien oder partikulären Materialien aus mineralischen Materialien, Kunststoffen oder Naturstoffen wie Holzspänen, Korkpartikeln, Glaspartikel oder Glaspulver, oder aus Kombinationen dieser Materialien.

Mit dem erfindungsgemäßen Verfahren wird die Durchsatzleistung bei der Herstellung der Dispersionspulver mittels Sprühtrocknung sowie die Produktqualität der Dispersionspulver aufgrund mehrerer Faktoren deutlich gesteigert:
In den Verfahren aus dem Stand der Technik mit Speisetemperaturen unter 100°C muss eine größere Wärmemenge zunächst von der heißen Trocknungsluft auf den "kalten" Speisetropfen übertragen werden um die Wasserverdunstung zu bewirken. Dagegen ist bei dem erfindungsgemäßen Verfahren ein Großteil der für die Verdunstung erforderlichen Wärmemenge bereits in der Speise enthalten. Durch die effizientere Energieverteilung ("bereits im Tropfen anstelle Wärmeübergang von der Luft auf den Tropfen") ist die Tropfentrocknung schneller.

Mit dem erfindungsgemäßen Verfahren wird die dem Trocknungsprozess zugeführte Energie (Gesamtenergie pro Zeiteinheit) erhöht, ohne dass die Temperatur der heißen Trocknungsluft erhöht werden muss. Dies ist insbesondere bei temperaturempfindlichen Produkten, wie es Dispersionspulver sind, von großem Vorteil.

Zusätzlich zu der Steigerung der Trocknerkapazität erhält man einen Beitrag zur Verbesserung der Produktqualität. Einen wesentlichen Beitrag zur Produktqualität und Energieeffizienz erhält man mit der erhöhten Speisetemperatur auch deshalb, weil sich auch die Speiseviskosität umso mehr verringert, je höher man die Speise vorerwärmt. Es bilden sich feinere Tropfen, die aufgrund der größeren Tropfenoberfläche der zerstäubten Flüssigkeit schneller trocknen. Dies hat auch überraschenderweise einen positiven Einfluss auf die Produktqualität: In der Folge bilden sich weniger Pulveragglomerate.

Da man mit dem erfindungsgemäßen Verfahren in die Lage versetzt wird, Speisen mit höherer Viskosität und entsprechend höherem Speisefeststoffgehalt zu zerstäuben, wird der spezifische Energieverbrauch pro Menge Pulver deutlich reduziert, da die Menge zu verdampfenden Wassers wesentlich reduziert ist.

Die Viskosität der Speise ist temperaturabhängig und nimmt mit steigender Temperatur ab. Das Zerstäubungsverhalten der Düsenzerstäubung, wie z.B. die Tropfengrößenverteilung, ist unter anderem abhängig von der Speiseviskosität. Mit dem erfindungsgemäßen Verfahren ist es möglich mit höherviskosen Speisen gute Zerstäubungsergebnisse zu erzielen, wohingegen bei Speisetemperaturen unter 100°C mit höherviskosen Speisen keine ausreichende Zerstäubung oder unzureichende Pulvereigenschaften erhalten wurden.

Überraschenderweise konnte keine Zersetzung der Polymerisate beobachtet werden. Selbst bei hydrolyseempfindlichen Polymerisaten mit Estergruppen, beispielsweise Vinylacetat enthaltenden Polymerisaten, tritt keine nennenswerte Abspaltung der Acetatgruppe auf. Überraschend war auch, dass die Blockstabilität der erfindungsgemäß getrockneten Polymerisate nicht negativ beeinflusst wird. Trotz der thermischen Belastung bei Vorerwärmung der Dispersion und bei Kontakt mit dem Trocknungsgas, jeweils bei Temperaturen über 100°C und damit deutlich oberhalb der Glasübergangstemperatur Tg der Polymerisate (beispielsweise Vinylacetat-Ethylen-Copolymerisate mit einer Tg um 0°C) bzw. der Glasübergangstemperatur Tg der Trocknungshilfe (beispielsweise Polyvinylalkohol mit einer Tg von ca. 70°C), konnte kein Verbacken oder Verklumpen der Polymerisatteilchen beobachtet werden. Die Redispersionsqualität wird durch das erfindungsgemäße Verfahren nicht verschlechtert, sondern im Gegenteil bezüglich Redispergierbarkeit und Blockfestigkeit verbessert (siehe Beispiele).

Die nachfolgenden Beispiele dienen der weiteren Erläuterung der Erfindung:
Verfahren zur Beurteilung der Dispersionspulver-Qualität:
   Blocktest zur Bestimmung der Blockstabilität:
Zur Bestimmung der Blockstabilität wurde das jeweilige Dispersionspulver in ein Eisenrohr mit Verschraubung gefüllt und danach mit einem Metallstempel belastet. Unter Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des jeweiligen Pulvers bestimmt. Die Blockstabilität wurde wie folgt klassifiziert:
   1 = sehr gute Blockstabilität
   2 = gute Blockstabilität
   3 = befriedigende Blockstabilität, leicht verklumptes Pulver
   4 = nicht blockstabil, Pulver lässt sich nicht zerdrücken oder ist nach Zerdrücken nicht mehr rieselfähig.

### Test zum Redispergierverhalten - Redispersion:

Das Absitzverhalten der Redispersion (Redispergierverhalten) diente als Maß für die Redispergierbarkeit der Pulvers. Zunächst wurden die Dispersionspulver jeweils in Wasser, durch Einwirkung von starken Scherkräften in einer Mörsermühle (z.B. der Fa. Retsch), redispergiert. Es wurde eine Redispersion mit einem Festgehalt von 50 Gew.-% hergestellt. Anschließend wurde die Redispersion jeweils auf einen Festgehalt von 0,5 Gew.-% verdünnt. Das Absitzverhalten wurde dann an den verdünnten Redispersionen bestimmt. Dazu wurden jeweils 100 ml dieser Redispersion in eine graduierte Röhre gefüllt, und die Absitzhöhe an Feststoff gemessen. Die Messergebnisse in mm Absitz nach 24 Stunden wurden wie folgt zur Qualifizierung der Redispersion klassifiziert:
1 = sehr gute Redispersion (Absitz kleiner 1,0 mm)
2 = gute Redispersion (Absitz 1,0 mm bis 2,0 mm)
3 = mäßige Redispersion (Absitz 2,0 mm bis 5,0 mm)
4 = schlechte Redispersion (Absitz größer 5,0 mm)

### Verfahren zur Bestimmung der Restfeuchte des Dispersionspulvers:

Die Messung der Restfeuchte des Dispersionspulvers erfolgte in Anlehnung an DIN EN ISO 3251. Abweichend von der Norm wurden jeweils 5 g bis 6 g Dispersionspulver auf einer Aluschale in einem Halogentrockner (Fa. Mettler Toledo, Typ HR 73 oder HB 43) bis zur Gewichtskonstanz bei 115°C getrocknet. Der Masseverlust in Gew.-% entspricht dem Restfeuchteanteil des Dispersionspulvers in Gew.-%.

### Verfahren zur Bestimmung der Partikelgröße (Median) des Dispersionspulvers:

Die Messung der Partikelgröße erfolgte mittels Laserbeugung mit dem Laserbeugungsgerät LS 100Q mit Trockenmodul der Firma Beckman Coulter nach Gerätevorschrift.

### Verfahren zur Bestimmung des Schüttgewichts des Dispersionspulvers:

Die Bestimmung des Schüttgewichts (Schüttdichte) erfolgte mit dem Verfahren gemäß der Norm EN ISO 60.

### Verfahren zur Bestimmung der Viskosität:

Die Viskosität der Dispersion oder Speise wurde nach Temperierung auf 23°C mit einem Brookfield-Viskosimeter (DV Prime) bei 20 UpM unter Verwendung der nach Herstellerangabe erforderlichen Standardspindel gemessen.

### Verfahren zur Bestimmung des Feststoffgehaltes:

Die Messung des Feststoffgehaltes der Dispersion oder Speise erfolgte in Anlehnung an DIN EN ISO 3251 (Aluminiumfolie, 20 min bei 110°C im Trockenschrank).

### Beispiel 1:

Zu einer wässrigen Vinylacetat-Ethylen-Copolymer-Dispersion (Tg = ca. +15°C, Festgehalt ca. 54 %) wurden 9 Gew.-% Polyvinylalkohol, bezogen auf Copolymer, in Form einer 20 Gew.-%-igen wässrigen Polyvinylalkohollösung zugegeben. Der Polyvinylalkohol hatte eine Höppler-Viskosität von 4 mPas (in 4 %-iger wässriger Lösung, Methode nach Höppler bei 20°C, DIN 53015) und einen Hydrolysegrad von 88 Mol-%. Anschließend wurde mit Wasser verdünnt und ein Speisefeststoffgehalt von 43,0 Gew.-% eingestellt. Die Speiseviskosität betrug bei 23°C 180 mPas.

Vor der Sprühtrocknung wurde die Speise jeweils auf die in Tabelle 1 angegebene Temperatur erwärmt, wobei die Erwärmung auf der Druckseite einer Hochdruckpumpe mittels temperiertem Ölbad und Rohrwärmetauscher erfolgte.

Die Sprühtrocknung erfolgte in einem handelsüblichen Sprühtrocknungsturm mit einer Einstoffdüse (Druckdüse) im Gleichstrom mit Trocknungsluft mit einer Trocknungslufteintrittstemperatur von ca. 136°C und einer Trocknungsluftaustrittstemperatur von ca. 85°C. Der Zerstäubungsdruck betrug ca. 30 bar (= Druck auf der Druckseite der Hochdruckpumpe). Während der Trocknung wurde dem Trocknungsgas jeweils 10 Gew.-% Antiblockmittel (1:1-Mischung aus Kaolin und Calciumcarbonat) zugegeben, jeweils bezogen auf die polymeren Bestandteile der Speisedispersion.

**Tabelle 1:**

| Versuch | T(Speise) (°C) | Median (µm) | Restfeuchte (%) | Blocktest | Schüttgewicht (g/L) | Redispersior |
|---|---|---|---|---|---|---|
| 1.1 | 45 | 123 | 1,3 | 3 bis 4 | 441 | Schlecht |
| 1.2 | 76 | 100 | 0,7 | 3 | 482 | Schlecht |
| 1.3 | 94 | 119 | 0,7 | 1 bis 2 | 520 | Mäßig |
| 1.4 | 104 | 112 | 0,7 | 1 | 566 | Gut |
| 1.5 | 110 | 109 | 0,6 | 1 | 573 | Gut |
| 1.6 | 119 | 110 | 0,6 | 1 | 582 | Gut |
| 1.7 | 130 | 108 | 0,7 | 1 | 580 | Sehr gut |
| 1.8 | 140 | 100 | 0,9 | 2 | 559 | Sehr gut |

In Tabelle 1 zeigen diejenigen Dispersionspulver, welche bei relativ niedrigen Speisetemperaturen von 40°C bzw. 76°C hergestellt wurden, einen deutlichen Mangel an Blockstabilität und Redispersionsqualität. Erst mit weiter steigenden Speisetemperaturen wurden diese Qualitätseigenschaften des Pulvers besser. Erstaunlicherweise konnte durch Erhöhung der Speisetemperatur über 100°C die Pulverqualität weiter verbessert werden. Nicht nur die Blockstabilität und die Redispersion wurden deutlich verbessert, auch das Schüttgewicht des Pulvers wurde erhöht.

### Beispiel 2:

Es wurde wie in Beispiel 1 vorgegangen, jedoch hatte die Speise bei 23°C einen höheren Speisefeststoffgehalt von 44,7 Gew.-% und eine höhere Speiseviskosität von 340 mPas bei 23°C. Der Zerstäubungsdruck wurde auf ca. 60 bar angehoben. Die Speisetemperatur wurde jeweils von 40°C bis 130°C variiert. Die Ergebnisse sind in Tabelle 2 zusammengefasst.

**Tabelle 2:**

| Versuch | T(Speise) (°C) | Median (µm) | Restfeuchte (%) | Blocktest | Schüttgewicht (g/L) | Redispersion |
|---|---|---|---|---|---|---|
| 2.1 | 40 | Keine Zerstäubung möglich | Entfällt | Entfällt | Entfällt | Entfällt |
| 2.2 | 74 | 94 | 1,8 | 4 | 460 | Schlecht |
| 2.3 | 96 | 80 | 0,5 | 1 bis 2 | 533 | Mäßig |
| 2.4 | 118 | 88 | 0,5 | 1 | 558 | Gut |
| 2.5 | 130 | 82 | 0,5 | 1 | 563 | Gut |

Im Vergleich zu Beispiel 1 wurde in Beispiel 2 der Speisefeststoffgehalt und folglich die Speiseviskosität angehoben. Ist die Viskosität zu hoch, kann die Tropfenbildung bei der Druckdüse gestört werden oder gar völlig ausbleiben. Im Beispiel 2 konnte trotz erhöhtem Zerstäubungsdruck (60 bar statt 30 bar) bei 40°C Speisetemperatur keine Zerstäubung erreicht werden, und auch die Ergebnisse bei 74°C und 96°C waren unzureichend. Wie in Beispiel 1 ließen sich auch in Beispiel 2 mit Speisetemperaturen über 100°C die Pulver- und Redispersionseigenschaften deutlich verbessern. Aufgrund der Trocknung einer Speise mit höherer Viskosität, das heißt höherem Feststoffgehalt, reduzierte sich auch der spezifische Energieverbrauch gegenüber Beispiel 1.

### Beispiel 3:

Es wurde wie in Beispiel 2 vorgegangen, jedoch hatte die Speise einen noch höheren Speisefeststoffgehalt von 46,3 Gew.-% und eine noch höhere Speiseviskosität von 550 mPas bei 23°C. Der Zerstäubungsdruck blieb bei ca. 60 bar. Die Speisetemperatur wurde von 40°C bis 129°C variiert. Die Ergebnisse sind in Tabelle 3 zusammengefasst.

**Tabelle 3:**

| Versuch | T(Speise) (°C) | Median (µm) | Restfeuchte (%) | Blocktest | Schüttgewicht (g/L) | Redispersion |
|---|---|---|---|---|---|---|
| 3.1 | 40 | Keine Zerstäubung möglich | Entfällt | Entfällt | Entfällt | Entfällt |
| 3.2 | 74 | Keine Zerstäubung möglich | Entfällt | Entfällt | Entfällt | Entfällt |
| 3.3 | 96 | 104 | 1,7 | 3 bis 4 | 451 | schlecht |
| 3.4 | 115 | 92 | 0,9 | 2 | 537 | Gut |
| 3.5 | 129 | 87 | 0,8 | 2 | 525 | Gut bis sehr gut |

Bei der in Beispiel 3 eingesetzten Speise mit hohem Feststoffgehalt von 46,3 % ist es nicht gelungen, bei Speisetemperaturen unter 100°C ein akzeptables Dispersionspulver mittels Sprühtrocknung zu erzeugen. Selbst bei 96°C Speisetemperatur war das Pulver sehr feucht, nicht blockstabil und schlecht in der Redispersion. Erst die Erwärmung der Speise über 100°C brachte gute Zerstäubung und folglich gute Dispersionspulver. Da der Feststoffgehalt der Speise erhöht war, musste spezifisch weniger Wasser verdunstet werden und der spezifische Energieverbrauch nahm gegenüber Beispiel 1 und 2 weiter ab.

### Beispiel 4:

Zu einer wässrigen Vinylchlorid/Ethylen/Vinyllaurat-Copolymer-Dispersion (Tg ca. 0°C, Festgehalt der Dispersion ca. 50 Gew.-%) wurden 10 Gew.-% Polyvinylalkohol, bezogen auf Copolymer, in Form einer 10 Gew.-%-igen wässrigen Polyvinylalkohollösung zugegeben. Der Polyvinylalkohol hatte eine Höppler-Viskosität von 23 mPas (in 4 %-iger wässriger Lösung, Methode nach Höppler bei 20°C, DIN 53015) und einen Hydrolysegrad von 88 Mol-%. Anschließend wurde mit Wasser verdünnt und ein Speisefeststoffgehalt von 29,3 Gew.-% eingestellt. Die Speiseviskosität betrug 150 mPas bei 23°C.

Die Erwärmung der Speise und die Sprühtrocknung wurde analog Beispiel 1 durchgeführt. Die Speisetemperatur wurde von 40°C bis 131°C variiert. Die Ergebnisse sind in Tabelle 4 zusammengefasst.

**Tabelle 4:**

| Versuch | T(Speise) (°C) | Median (µm) | Restfeuchte (%) | Blocktest | Schüttgewicht (g/L) | Redispersion |
|---|---|---|---|---|---|---|
| 4.1 | 40 | Keine Zerstäubung möglich | Entfällt | Entfällt | Entfällt | Entfällt |
| 4.2 | 96 | 151*) | 1,9 | 4 | 392 | Mäßig |
| 4.3 | 110 | 135 | 1,2 | 2 bis 3 | 429 | Gut |
| 4.4 | 131 | 122 | 1,0 | 2 | 439 | Gut |

| | | | | | | |
|---|---|---|---|---|---|---|
| *) Viel Siebrückstand, große Klumpen -> sehr feuchtes Material abgesiebt | | | | | | |

Wie Beispiel 4 zeigt, ist die erfindungsgemäße Erhöhung der Speisetemperatur auch bei besonders temperaturempfindlichen Dispersionspulvern wie einem Vinylchlorid-Copolymer ohne negative Beeinflussung der Pulver- oder Redispersionsqualität anwendbar.

### Beispiel 5:

Analog Beispiel 1 wurde eine Speise mit einem Feststoffgehalt von 42,5 Gew.-% und einer Speiseviskosität von ca. 150 mPas bei 23°C hergestellt. Die Sprühtrocknung erfolgte in einem großen, handelsüblichen Sprühtrocknungsturm mit mehreren Einstoffdüsen (Druckdüsen) nach dem Gleichstromprinzip. Die Trocknungslufteintrittstemperatur betrug ca. 160°C, die Trocknungsluftaustrittstemperatur ca. 80°C. Der Zerstäubungsdruck war ca. 100 bar. Die Erwärmung der Speise auf die in Tabelle 5 angegebenen Werte (70°C bis 115°C) erfolgte auf der Saugseite einer Hochdruckpumpe mittels mehrlagigem Plattenwärmetauscher im Gegenstromprinzip. Die Ergebnisse sind in Tabelle 5 zusammengefasst.

**Tabelle 5:**

| Versuch | T(Speise) (°C) | Median (µm) | Restfeuchte (%) | Blocktest | Schüttgewicht (g/L) | Redispersion | Relative Trocknerleistung in % |
|---|---|---|---|---|---|---|---|
| 5.1 | 70 | 180 | 1,0 | 3 bis 4 | 415 | Mäßig bis gut | 100% |
| 5.2 | 86 | 158 | 0,8 | 2 bis 3 | 446 | Gut | 106% |
| 5.3 | 93 | 157 | 0,8 | 2 | 442 | Gut | 107 % |
| 5.4 | 98 | 147 | 0,8 | 2 | 458 | Gut | 109 % |
| 5.5 | 104 | 148 | 0,8 | 2 | 461 | Gut | 112% |
| 5.6 | 115 | 141 | 0,7 | 1 bis 2 | 470 | Gut bis sehr gut | 114% |

Die Ergebnisse aus Tabelle 5 zeigen, dass sich bei Sprühtrocknung der auf über 100°C erwärmten Speisen die Pulvereigenschaften der damit erhaltenen Dispersionspulver verbesserten, und die Trocknerleistung deutlich gesteigert werden konnte.

## Patentansprüche

1. Verfahren zur Herstellung von Dispersionspulvern durch Sprühtrocknung von wässrigen Polymerdispersionen von Polymerisaten von einem oder mehreren ethylenisch ungesättigten Monomeren ausgewählt aus der Gruppe umfassend Vinylester, Methacrylsäureester, Acrylsäureester, Olefine, Diene, Vinylaromaten und Vinylhalogenide, welche eine Glasübergangstemperatur Tg von -20°C bis +40°C aufweisen, mit einem Trocknungsgas in einem Düsenzerstäubungstrockner, **dadurch gekennzeichnet, dass** die wässrige Polymerdispersion vor deren Zerstäubung unter Druck auf eine Temperatur von 100°C bis 200°C vorerwärmt wird und mit dieser Temperatur zerstäubt wird, wobei der Druck so eingestellt wird, dass die wässrige Phase der Polymerdispersion bei der gewählten Temperatur nicht siedet.

2. Verfahren nach Anspruch 1, **dadurch gekennzeichnet, dass** die wässrige Polymerdispersion vor deren Zerstäubung unter Druck auf eine Temperatur von 100°C bis 150°C vorerwärmt wird.

3. Verfahren nach Anspruch 1, **dadurch gekennzeichnet, dass** die wässrige Polymerdispersion vor deren Zerstäubung unter Druck auf eine Temperatur von 110°C bis 140°C vorerwärmt wird.

4. Verfahren nach Anspruch 1 bis 3, **dadurch gekennzeichnet, dass** die wässrige Polymerdispersion in einem Düsenzerstäubungstrockner mittels einer oder mehreren Einstoffdüsen, oder einer oder mehreren Zweistoffdüsen oder einer oder mehreren Mehrstoffdüsen zerstäubt wird.

5. Verfahren nach Anspruch 1 bis 4, **dadurch gekennzeichnet, dass** die Vorerwärmung unter Druck auf der Saugseite oder der Druckseite einer Pumpe erfolgt, welche die Speise zu den Düsen fördert.

6. Verfahren nach Anspruch 5, **dadurch gekennzeichnet, dass** die Vorerwärmung auf der Saugseite der Pumpe bei einem Druck von bis zu 20 bar abs. erfolgt.

7. Verfahren nach Anspruch 5, **dadurch gekennzeichnet, dass** die Vorerwärmung auf der Druckseite der Pumpe bei einem Druck von 10 bis 200 bar abs. erfolgt.

8. Verfahren nach Anspruch 1 bis 7, **dadurch gekennzeichnet, dass** das Trocknungsgas auf eine Eintrittstemperatur von 130°C bis 210°C vorerwärmt wird.

9. Verfahren nach Anspruch 1 bis 8, **dadurch gekennzeichnet, dass** wässrige Polymerdispersionen sprühgetrocknet werden von Polymerisaten aus der Gruppe enthaltend Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit einem oder mehreren weiteren Vinylestern, Mischpolymerisate von Vinylacetat mit Ethylen und Acrylsäureester, Mischpolymerisate von Vinylacetat mit Ethylen und Vinylchlorid, Mischpolymerisate von Vinylchlorid und Ethylen und gegebenenfalls einem oder mehreren weiteren Vinylestern, Mischpolymerisate von Styrol mit Acrylsäureester, Mischpolymerisate von Styrol mit 1,3-Butadien, wobei die genannten Polymerisate jeweils noch 0,1 bis 10 Gew.-%, bezogen auf das Gesamtgewicht des Polymerisats, von einem oder jeweils von mehreren Hilfsmonomeren copolymerisiert enthalten können, und sich die Angaben in Gew.-% auf jeweils 100 Gew.-% aufaddieren.

## Claims

1. Process for preparing dispersion powders by spray drying of aqueous polymer dispersions of polymers of one or more ethylenically unsaturated monomers selected from the group encompassing vinyl esters, methacrylic esters, acrylic esters, olefins, dienes, vinylaromatics, and vinyl halides, which have a glass transition temperature Tg of - 20°C to + 40°C, with a drying gas in a nozzle atomization dryer, **characterized in that** the aqueous polymer dispersion, before being atomized, is preheated under pressure to a temperature of 100°C to 200°C and is atomized at this temperature, the pressure being set such that the aqueous phase of the polymer dispersion does not boil at the temperature selected.

2. Process according to Claim 1, **characterized in that** the aqueous polymer dispersion, before being atomized, is preheated under pressure to a temperature of 100°C to 150°C.

3. Process according to Claim 1, **characterized in that** the aqueous polymer dispersion, before being atomized, is preheated under pressure to a temperature of 110°C to 140°C.

4. Process according to Claim 1 to 3, **characterized in that** the aqueous polymer dispersion is atomized in a nozzle atomization dryer by means of one or more single-fluid nozzles, or one or more two-fluid nozzles or one or more multifluid nozzles.

5. Process according to Claim 1 to 4, **characterized in that** the preheating takes place under pressure on the suction side or the pressure side of a pump which conveys the feed to the nozzles.

6. Process according to Claim 5, **characterized in that** the preheating takes place on the suction side of the pump at a pressure of up to 20 bar abs.

7. Process according to Claim 5, **characterized in that** the preheating takes place on the pressure side of the pump at a pressure of 10 to 200 bar abs.

8. Process according to Claim 1 to 7, **characterized in that** the drying gas is preheated to an entry temperature of 130°C to 210°C.

9. Process according to Claim 1 to 8, **characterized in that** aqueous polymer dispersions are spray dried of polymers from the group containing vinyl acetate homopolymers, copolymers of vinyl acetate with ethylene, copolymers of vinyl acetate with ethylene and one or more further vinyl esters, copolymers of vinyl acetate with one or more further vinyl esters, copolymers of vinyl acetate with ethylene and acrylic ester, copolymers of vinyl acetate with ethylene and vinyl chloride, copolymers of vinyl chloride and ethylene and optionally one or more further vinyl esters, copolymers of styrene with acrylic ester, copolymers of styrene with 1,3-butadiene, the stated polymers in each case possibly further containing 0.1 to 10 wt%, based on the total weight of the polymer, of one or in each case of two or more auxiliary monomers in copolymerized form, and the figures in wt% adding up to 100 wt% in each case.

## Revendications

1. Procédé pour la préparation de poudres de dispersion par séchage par pulvérisation de dispersions aqueuses polymères, constituées par des polymères d'un ou de plusieurs monomères éthyléniquement insaturés choisis dans le groupe comprenant les esters de vinyle, les esters de l'acide méthacrylique, les esters de l'acide acrylique, les oléfines, les diènes, les aromatiques de vinyle et les halogénures de vinyle, qui présentent une température de transition vitreuse Tg de -20 °C à +40 °C, à l'aide d'un gaz de séchage dans un séchoir à pulvérisation à buses, **caractérisé en ce que** la dispersion aqueuse polymère est préchauffée sous pression à une température de 100°C à 200°C avant sa pulvérisation et est pulvérisée à cette température, la pression étant réglée de manière telle que la phase aqueuse de la dispersion polymère ne bout pas à la température choisie.

2. Procédé selon la revendication 1, **caractérisé en ce que** la dispersion aqueuse polymère est préchauffée sous pression à une température de 100°C à 150°C avant sa pulvérisation.

3. Procédé selon la revendication 1, **caractérisé en ce que** la dispersion aqueuse polymère est préchauffée sous pression à une température de 110°C à 140°C avant sa pulvérisation.

4. Procédé selon la revendication 1 à 3, **caractérisé en ce que** la dispersion aqueuse polymère est pulvérisée dans un sécheur à pulvérisation à buses au moyen d'une ou de plusieurs buses à une substance ou d'une ou plusieurs buses à deux substances ou d'une ou plusieurs buses à substances multiples.

5. Procédé selon la revendication 1 à 4, **caractérisé en ce que** le préchauffage sous pression a lieu sur le côté aspiration ou le côté refoulement d'une pompe qui transporte la pâte vers les buses.

6. Procédé selon la revendication 5, **caractérisé en ce que** le préchauffage a lieu sur le côté aspiration de la pompe à une pression de jusqu'à 20 bars abs.

7. Procédé selon la revendication 5, **caractérisé en ce que** le préchauffage a lieu sur le côté refoulement de la pompe à une pression de 10 à 200 bars abs.

8. Procédé selon la revendication 1 à 7, **caractérisé en ce que** le gaz de séchage est préchauffé à une température d'entrée de 130°C à 210°C.

9. Procédé selon la revendication 1 à 8, **caractérisé en ce qu'**on sèche par pulvérisation des dispersions aqueuses polymères de polymères du groupe contenant les homopolymères d'acétate de vinyle, les copolymères d'acétate de vinyle et d'éthylène, les copolymères d'acétate de vinyle et d'éthylène et d'un ou de plusieurs autres esters de vinyle, les copolymères d'acétate de vinyle et d'un ou de plusieurs autres esters de vinyle, les copolymères d'acétate de vinyle et d'éthylène et d'esters de l'acide acrylique, les copolymères d'acétate de vinyle et d'éthylène et de chlorure de vinyle, les copolymères de chlorure de vinyle et d'éthylène et le cas échéant d'un ou de plusieurs autres esters de vinyle, les copolymères de styrène et d'esters de l'acide acrylique, les copolymères de styrène et de 1,3-butadiène, les polymères mentionnés pouvant à chaque fois encore contenir 0,1 à 10% en poids, par rapport au poids total du polymère, d'un ou à chaque fois de plusieurs monomères auxiliaires sous forme copolymérisée, la somme des indications en % en poids valant à chaque fois 100% en poids.
